# EUROPEAN PATENT APPLICATION

(11) **EP 4 553 990 A2**
(43) Date of publication of application: **14.05.2025**
(21) Application number: 25167550.0
(22) Date of filing: 15.02.2023
(51) Int. Cl.: H01M 50/514

(54) **MODULAR BATTERY SYSTEM**

(30) Priority: 24.02.2022 SE 2250250
(62) Divisional of application: 23760472.3
(71) Applicant: Scandinavian Battery Technology AB, 534 92 Tråvad (SE)
(72) Inventor: MANNERHAGEN, Felix, 449 50 Alafors (SE); ERIKSSON, Frank, 534 92 Tråvad (SE)
(74) Representative: Zacco Sweden AB

(57) **Abstract**

The present disclosure relates to a battery module, a collocated battery module, a battery system and a battery pack. The battery module comprises at least two battery cells arranged to be coupled in series; wherein the battery module is configured to be removably connectable to an adjacent first corresponding battery module by a first electrical connection. The battery module is further configured to be removably connectable to the adjacent first corresponding battery module and further to an adjacent second corresponding battery module by at least one second electrical connection such that each battery cell comprised in the battery module is further arranged to be removably connectable to at least one battery cell comprised in the adjacent first and second battery modules by the at least one second electrical connection, wherein the first electrical connection is a parallel electrical connection and is different from the at least one second electrical connection.

## Description

### TECHNICAL FIELD

The present invention relates to a modular battery system. In particular, embodiments herein relate to a battery module comprising one or more battery cells and a modular battery system, as well as a method for manufacturing such a modular battery system.

### BACKGROUND

The recent surge in electrification such as development of electrical vehicles has resulted in reinvigorated attempts to design and produce efficient and durable battery systems to address the rising demands in the industry. To this end, many battery systems including battery modules each comprising individual battery cells have been presented. However, the conventional systems suffer from multiple drawbacks such as short lifespan, service and maintenance challenges, inflexibility and non-scalability as well as recycling problems.

Therefore, there is a need in the field of battery systems to develop more flexible, cost-effective, versatile and scalable battery systems and methods catering to the needs of the energy consumers.

### SUMMARY

It is therefore an object of the present disclosure to provide a battery module comprising at least two battery cells, a collocated battery module, a battery system, a battery pack and a method which alleviates all or at least some of the drawbacks of the presently known solutions. These and other objects are achieved by various aspects of the present disclosure as defined in the appended independent claims. The term exemplary or example is in the present context to be understood as serving as an instance, example or illustration.

According to a first aspect of the present disclosure there is provided a battery module comprising at least two battery cells arranged to be coupled in series, wherein the battery module is configured to be removably connectable to an adjacent first corresponding battery module by a first electrical connection. The battery module is further configured to be removably connectable to the adjacent first corresponding battery module and further to an adjacent second corresponding battery module by at least one second electrical connection such that each battery cell comprised in the battery module is further arranged to be removably connectable to at least one battery cell comprised in the adjacent first and second battery modules by the at least one second electrical connection. The first electrical connection is a parallel electrical connection and is different from the at least one second electrical connection.

According to several embodiments, the battery module may further be configured to be removably connectable in parallel to at least one external electric load by a parallel electrical connection.

According to several exemplary embodiments, the battery module may further be configured to be removably connectable to a battery management system, BMS, unit by the at least one second electrical connection.

In several exemplary embodiments, the battery module may further comprise a positive battery module terminal and a negative battery module terminal. The battery module may further be configured to be removably coupled in parallel to the adjacent first corresponding battery module by the first electrical connection via the positive battery module terminal and the negative battery module terminal such that an electric current path may be formed between the positive and the negative terminals of the first electrical connection. The battery module may further be configured to be removably coupled to the adjacent first corresponding battery module and further to the adjacent second corresponding battery module by the at least one second electrical connection such that each battery cell comprised in the battery module may further be arranged to be removably coupled to at least one battery cell comprised in the adjacent first and second battery modules by the at least one second electrical connection. Thus, at least one signal path may be formed between the battery module and the adjacent first and second battery modules via the at least one second electrical connection, wherein the formed electric current path may be different from the formed at least one signal path.

Hence, the advantageous battery module, the battery system and the method according to the present disclosure provide a non-exhaustive list of advantageous effects including:
- A more scalable and flexible design of a battery module, a battery system and a battery pack;
- Facilitate maintenance and service of battery modules and battery packs on individual battery cell level without the need to remove the battery packs or battery system out of operation for repair and upgrade. This in turn contributes to improved economic and environmental sustainability.
- By the advantageous battery module, battery pack and battery system, more time and cost-efficient possibilities are provided for recycling of the battery packs. For instance, automated disassembly phase in the recycling process can be readily applied to the disclosed battery packs. This is thanks to the fact that the separation between the battery cells and all the connecting and coupling elements within the modules, to the other components of the battery pack, and to the battery system as well as to external loads is easier. Also, the scalability process of the modular battery system leads to a more predictable battery module design.
- By the proposed solution herein, a cost-efficient, modular, and scalable solution is provided, especially for small-scale manufacturers which would provide them with the possibility to join the electrification market with affordable investment and risk considerations.

In various exemplary embodiments each battery cell comprised in each battery module may be arranged to be removably coupled to an adjacent battery cell in the same battery module via an individual serial connection plate. In some embodiments, each battery cell comprised in each battery module may be arranged to be removably coupled to the individual serial connection plate via an electrically conductive adhesive element.

In yet another exemplary embodiment, the first electrical connection and/or the at least one second electrical connection between the battery module and the adjacent first and second battery modules may be formed via a conductive elastic and/or springing connection terminal.

According to a second aspect of the present disclosure there is provided a collocated battery module comprising a first battery module and a second battery module wherein each battery module comprises at least two battery cells arranged to be coupled in series. The first and the second battery modules are configured to be removably coupled in parallel by a first electrical connection. The first and the second battery modules are further configured to be removably coupled by at least one second electrical connection such that each battery cell comprised in each battery module is further arranged to be removably coupled to at least one battery cell comprised in the other battery module by the at least one second electrical connection. The first electrical connection is different from the at least one second electrical connection.

According to some embodiments, each of the first and the second battery modules of the collocated battery module may further comprise a positive battery module terminal and a negative battery module terminal. Each module may be configured such that an electric current path may be formed between the positive and the negative terminals of the first electrical connection. Each module may further be configured such that at least one signal path may be formed between the first and the second battery modules via the at least one second electrical connection; wherein the formed electric current path may be different from the formed at least one signal path.

In several embodiments, the collocated module may further be configured to be removably coupled in parallel to an external electric load by the first electrical connection via the positive and the negative battery module terminals such that the electric current path may be further formed between each battery module and the external electric load.

According to some exemplary embodiments, the collocated battery module may further be configured to be removably coupled to one or more other collocated battery modules and/or to a single battery module by the at least one second electrical connection, such that the at least one signal path may further be formed between each two adjacent collocated battery modules and/or between the adjacent collocated battery modules and the single battery modules.

In some exemplary embodiments, the collocated battery module and/or the single battery module may further be configured to be removably connectable to a battery management system, BMS, unit by the at least one second electrical connection.

In several exemplary embodiments, the collocated battery module and/or the single battery module may further be configured such that when removably coupled to the BMS unit, the at least one signal path may be further formed between the collocated battery module and/or the single battery module and the BMS unit.

In various exemplary embodiments, each battery cell comprised in each of the first and the second battery modules may be arranged to be removably coupled to an adjacent battery cell in the same battery module via an individual serial connection plate. According to some embodiments, each battery cell comprised in each of the first and the second battery modules may be arranged to be removably coupled to the individual serial connection plate via an electrically conductive adhesive element.

In some exemplary embodiments, the collocated battery module is configured such that the at least one second electrical connection may be formed via a conductive elastic and/or springing connection terminal.

According to a third aspect of the present disclosure, there is provided a modular battery system comprising one or more battery modules according to any one of the embodiments of the first aspect and/or the second aspect of this disclosure, arranged to be removably coupled to adjacent battery modules. The modular battery system further comprises a battery management system, BMS, unit arranged to be removably coupled to the one or more battery modules.

According to a further fourth aspect, there is provided a method of connecting a first and a second battery module each module comprising at least two battery cells. The method comprises removably coupling the at least two battery cells, comprised in each of the first and the second battery modules, in series such that each battery cell comprised in each battery module is arranged to be removably coupled to an adjacent battery cell in the same battery module via an individual serial connection. Removably coupling the first battery module and the second battery module such that the first and the second battery modules are removably coupled by a first electrical connection and/or at least one second electrical connection, wherein the first electrical connection is different from the at least one second electrical connection.

According to some exemplary embodiments, the method may further comprise forming an electric current path between the first and the second battery modules via the first electrical connection, wherein the first electrical connection may be a parallel electrical connection. The method may further comprise forming at least one signal path between the first and the second battery module via the at least one second electrical connection wherein the formed electric current path may be different from the formed at least one signal path.

Further embodiments of the different aspects are defined in the dependent claims.

It is to be noted that all the embodiments, elements, features and advantages associated with the first aspect also analogously apply to the second, third, and fourth aspects of the present disclosure.

These and other features and advantages of the present disclosure will in the following be further clarified in the following detailed description.

### BRIEF DESCRIPTION OF THE DRAWINGS

Further objects, features and advantages of embodiments of the disclosure will appear from the following detailed description, reference being made to the accompanying drawings. The drawings are not to scale.
Figs. 1a-b show schematic views of a battery module in accordance with some embodiments;
Fig. 1c shows a schematic illustration of a perspective exploded view of a battery module in accordance with several embodiments;
Fig. 1d illustrates an equivalent electrical circuit of the battery module in accordance with several embodiments;
Figs. 2a-b show a schematic illustration of a perspective view of a collocated battery module and its respective equivalent electrical circuit in accordance with some embodiments;
Figs. 3a-b show a schematic illustration of a perspective view of a battery system and its respective equivalent electrical circuit in accordance with several embodiments;
Fig. 4 shows a schematic illustration of a perspective view of a battery pack in accordance with some embodiments;
Fig. 5 shows a schematic flowchart of a method in accordance with several embodiments.

### DETAILED DESCRIPTION

In the following detailed description, some of the embodiments of the present disclosure will be described. However, those skilled in the art will appreciate that features of different embodiments are exchangeable among the embodiments and may be combined in various other ways, unless anything else is specifically indicated. The basics and conventional techniques in electronics, sensor systems, signal processing, data communication systems, integrated circuit design, printed circuit board (PCB) design and other components to carry out the disclosure are considered to be readily available to the person skilled in the art. The terms "first", "second" and the like as used herein, do not denote any order, quantity or importance, but rather are used to distinguish one element from another and aid the reader.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs).

In the following description of exemplary embodiments, the same reference numerals denote the same or similar components.

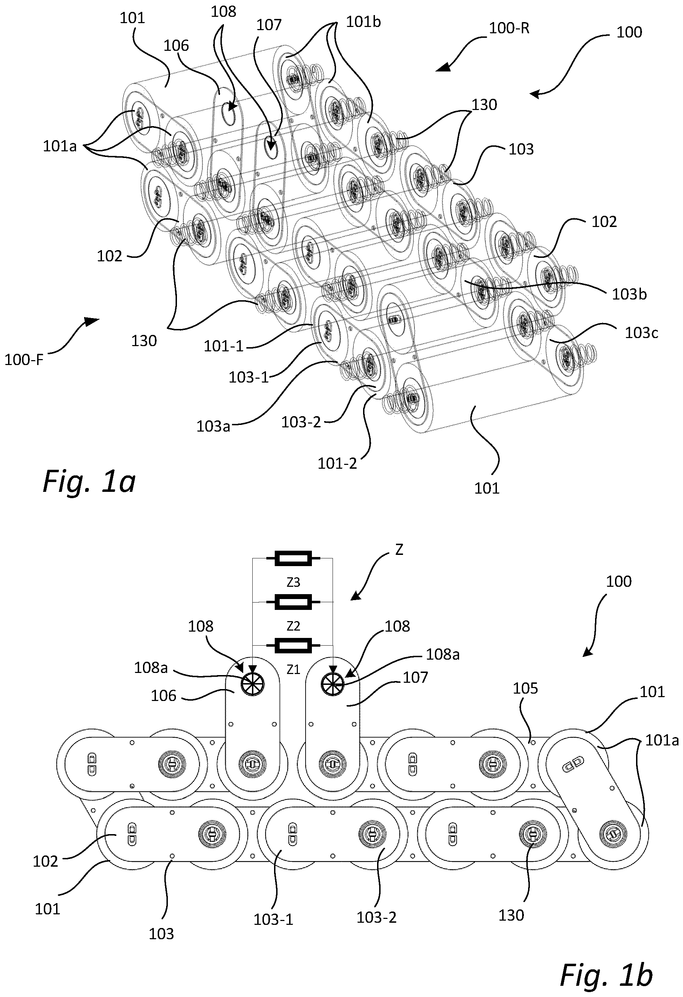

Fig. 1a shows a schematic drawing of a perspective view of a battery module 100 in accordance with several aspects and embodiments. The battery module 100 in this example comprises fourteen battery cells 101 which are arranged to be coupled in series. The battery cells in the present context are chargeable battery cells which can be repeatedly charged when depleted during the lifetime of the battery modules. In other examples and embodiments however, the battery module may comprise at least two battery cells arranged to be coupled in series. In some embodiments based the requirements of the design and intended application and performance requirements of the battery module, the battery modules may comprise 3, 4, 5, 6, 8, 9, 10, 100, 120, 240, 360 or any suitable number of battery cells arranged to be coupled in series. The battery module 100 in Fig 1a comprises fourteen cylindrically-shaped battery cells 101 which have been arranged adjacent each other and coupled by a series electrical connection 102. In other examples, the battery cells may be of any suitable geometrical form such as prismatic cells or pouch cells. Battery cells may provide any suitable output voltage known in the art and customized for the intended application. By coupling the battery cells in series, the desired level of voltage for each battery module 100 can be adjusted and customized. For instance, battery modules with varying output voltages can be readily built to meet the varying requirements from different consumers, simply by adjusting the number of battery cells connected in series in each battery module. The battery modules of the present disclosure may have various application areas such as sustainable energy sources for electrical vehicles including cars, trucks, busses, boats, etc., provisioning the varying energy demands of various types and models of electrical vehicles by providing battery modules having customized number of battery cells based on such requirements.

As also shown in a schematic side view of the battery module 100 in Fig. 1b, each battery cell 101 comprised in the battery module 100 is arranged to be removably coupled to an adjacent battery cell 101 in the battery module by the series electrical connection 102 via an individual serial connection plate 103. Each battery cell 101 has a first end 101a and a second end 101b. For the purpose of example only, in Fig. 1a, it has been shown that the first 101a and second 101b ends of the battery cells are arranged facing a front side 100-F and a rear side 100-R of the battery module 100. Fig. 1b thus shows the front side 100-F of the battery module 100.

Each serial connection plate such as plate 103a comprises a first end part 103-1 arranged to be removably coupled to the first end 101a of a first battery cell 101-1 comprised in the battery module 100. The serial connection plate 103a also comprises a second end part 103-2 arranged to be removably coupled to the first end 101a of an adjacent second battery cell 101-2 to the first battery cell 101-1 **both being comprised in the same battery module.** The second ends 101b of the first battery cell 101-1 and the second battery cell 101-2 are similarly removably coupled to the second ends 101b of their respective adjacent battery cells and by their respective individual serial connection plates 103b, 103c. Also, similarly, all the remaining battery cells in the battery module 100 of Fig. 1a are removably coupled to their adjacent battery cells such that a series electric connection is formed amongst all battery cells 101 comprised in the battery module 100.

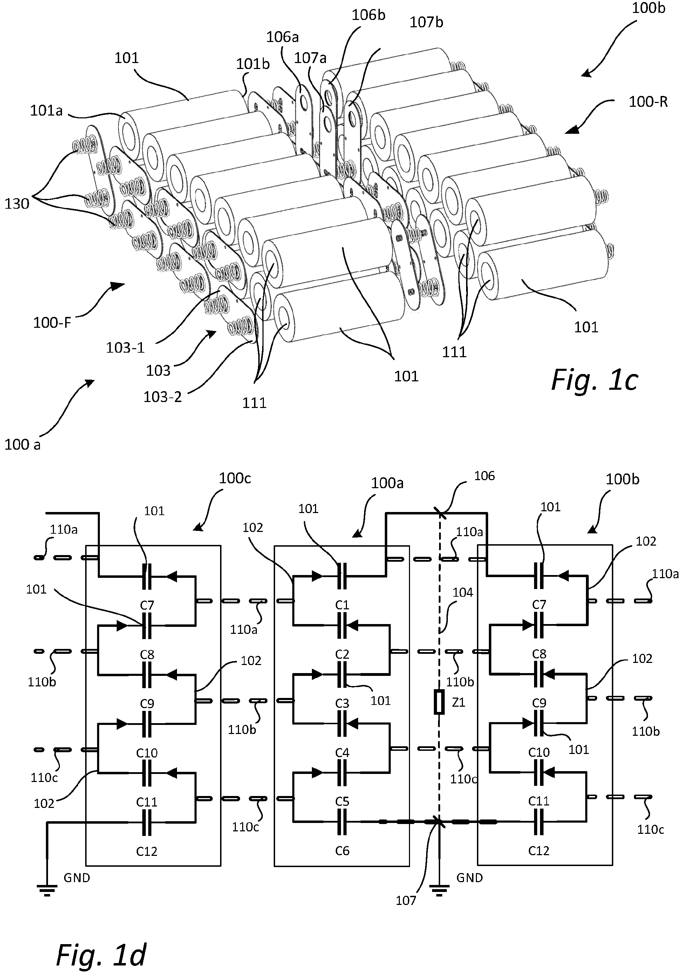

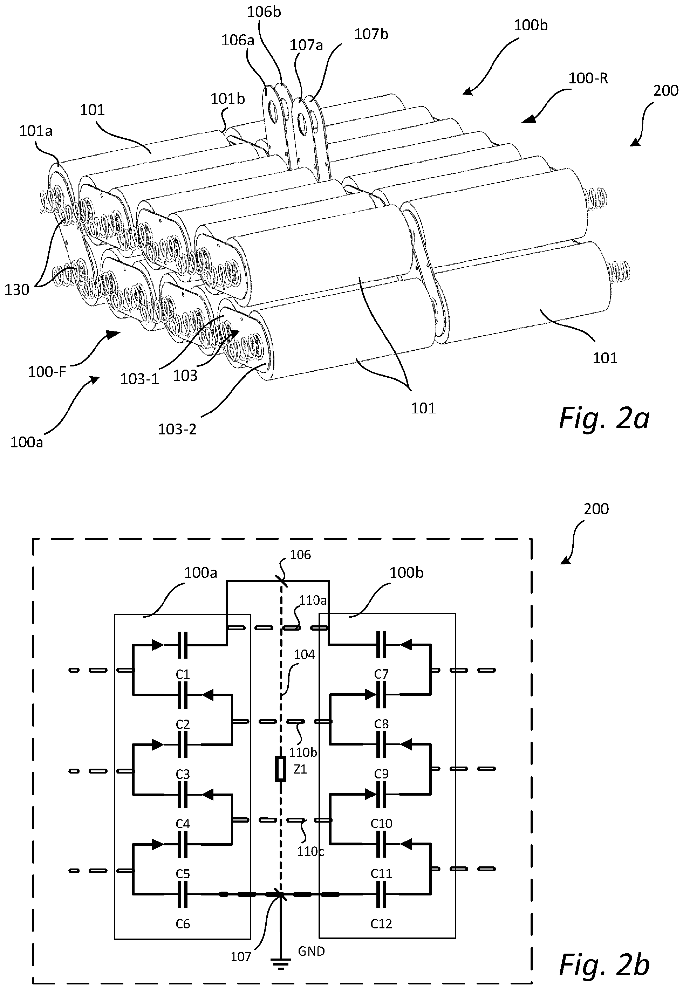

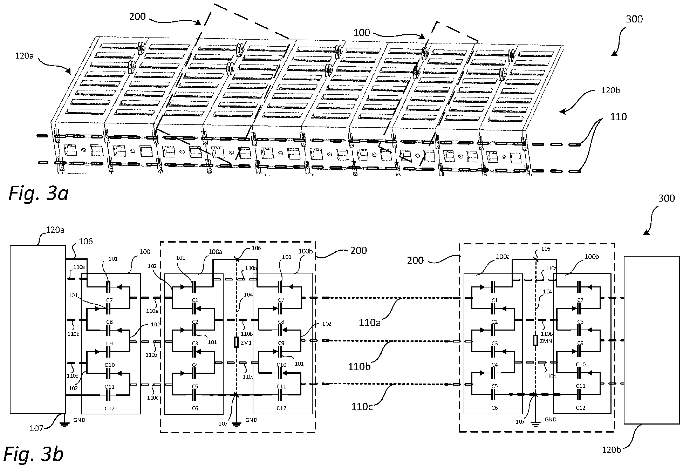

The serial connection plates 103 are conductive connection means configured to conduct electric current and can be made of several conductive materials such as metals such as copper or titanium, conductive polymers, organic materials such as graphite, etc. Each battery cell 101 comprised in each battery module 100 is arranged to be removably coupled to the individual serial connection plates 103 via an electrically conductive adhesive element 111 as shown in the example of Fig. 1c illustrating an exploded perspective view of two battery modules 100a, 100b arranged side-by-side, each comprising cells removably coupled by means of electrically conductive adhesive elements 111. Further, the battery modules 100a and 100b can also be removably coupled by the electrically conductive adhesive elements 111 to form a collocated battery module 200 according to several embodiments, which will be explained further in detail with reference to Figs. 2a-b. The removable connection between other components such as the battery modules, the battery modules 100, 200 and BMS units 120a, 120b and the like, e.g. as shown in the battery system 300 in Figs. 3a-b may also be realized by the electrically conductive adhesive elements 111. It should however be clear that any other type of conductive connection means such as welding or soldering couplings may be used by the person skilled in the art. It should however be appreciated that by using the advantageous electrically conductive adhesive elements 111 of the present disclosure, not only the use of welding or soldering in forming the battery modules or the battery pack 400 can be alleviated but also the drawbacks of thermal degradation of the conventional soldering/welding couplings can be easily prevented. This in turn may contribute to the longevity of the battery modules and the battery packs 400 comprising battery modules according to the present disclosure. Furthermore, using the removably connectable conductive adhesives, the process of recycling of the battery modules and battery packs can be automated since the separation of the removably coupled components can be done by e.g. applying a separation force to the couplings between the modules and cells. This provides the benefit of easier disassembly of components by robotics applying cleavage or peel stress to the couplings among the modules and cells during the recycling process. With the electrically conductive adhesive there will be no thermal stress on the battery cells, which removes the thermal degradation unknowns in the assembly process of battery modules and battery packs according to the present disclosure.

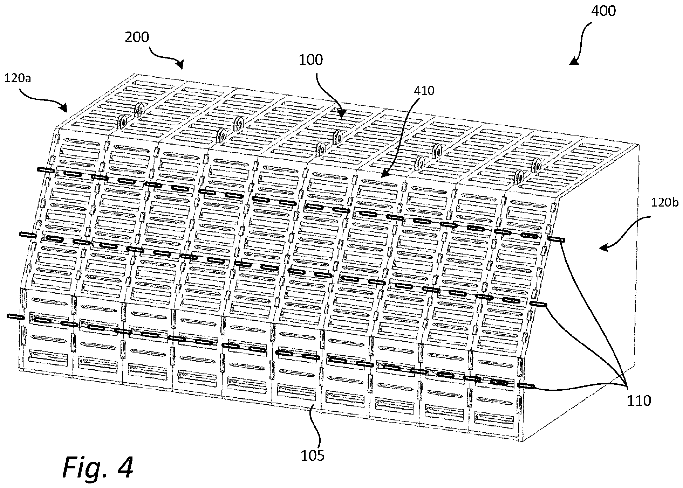

The battery cells comprised in the battery module 100 are mechanically secured in place by being arranged into a battery pack 400 comprising a plurality of battery modules 100, 200 such as the one shown in Fig. 4 comprising battery module holder elements 105 as shown in Fig. 1b or similar (not shown) to provide mechanical integrity to the battery system. In some aspects and embodiments, the battery pack comprises a housing 410 to mechanically support the battery modules and the battery cells.

In several embodiments, each battery module 100 further comprises a positive battery module terminal 106 and a negative battery module terminal 107 as shown in Figs. 1a-1b. The battery module 100 is thus configured to be removably connectable to at least one external load "Z" in parallel via the positive and negative battery module terminals as shown e.g. in Fig. 1b. The negative battery module terminal 107 is also configured to be connectable to a reference point such as a ground (GND) reference point as shown in Fig. 1d, an equivalent electrical circuit of at least one battery module 100 having six battery cells 101 according to the present disclosure. The at least one external load "Z" may be any kind of energy consumer coupled to the battery modules 100. In Fig. 1b, the at least one external load "Z" comprises external loads Z₁, Z₂, Z₃. However, in various embodiments, each battery module may be connectable to one "Z₁" or more such as "M"-external loads *"Z_{M}".* When *"N"* battery modules 100 are connected to each other in a modular battery system such as the battery system 300 in Figs. 3a-3b and each battery modules is connected to "M"-external loads, the number of external loads for module number *"N"* can be denoted as *"Z_{MN}",* wherein *"N"* and *"M"* are integers. In several embodiments, all modules may be connected to an equal number of external loads. In several embodiments, the positive and negative battery module terminals are formed by the serial connection plates 103. In the example of Figs. 1a.1b, the terminal plates 106 and 107 comprise openings 108 configured to be removably connectable to the at least external loads. Fig. 1b shows an example where a universal connector 108a is arranged in the openings 108 of each plate 106, 107 to removably couple the battery module 100 to the at least one external load "Z". The skilled person is clearly aware that there are various approaches to connect the battery modules 100 to external loads e.g. by means of soldering, welding, bolted connection, conductive adhesive elements, springloaded connections, etc., the details of which will be omitted herein for brevity.

In several aspects and embodiments, battery modules 100 are configured to be removably connectable to several other adjacent battery modules as e.g. shown in Fig. 1d or Figs. 3a-b. Fig. 1c depicts an equivalent electric circuit of the battery modules 100a, 100b, 100c arranged to be removably connectable to each other. Removably connectable or removably coupled in the context of the present disclosure is to be construed that elements and components such as battery modules 100, 100a, 100b, 100c can be arranged to be repeatedly and reversibly attachable and/or detachable to other battery modules, to other components and elements, to external electrical loads, to battery management systems (BMS) and the like. Coupled, connected, connectable, attachable, attached in the present context may be used to denote that battery modules and/or other components or elements within the scope of present disclosure can be understood as physically and/or electrically joined to each other. Therefore, one battery module can be configured to be connectable to one or more battery modules based on specific system designs, intended applications or performance requirements to deliver the required energy to the energy consumer systems. The battery modules thus can be repeatedly and reversibly attached to other battery modules to create a plurality of battery modules or repeatedly and reversibly detached from other battery modules or other components in a battery system. The battery modules may be removably attached to other battery modules e.g. to increase the energy capacity of a battery system configured to store and deliver electrical energy to energy consumers. Similarly, the battery modules may be removably detached for purposes such as repair, maintenance, recycling, and the like. Accordingly, a versatile and universal modular battery system can be realized without the need for redesigning the battery system for each individual energy consumer with different energy level requirements.

Returning to the example of Fig. 1d, the battery modules 100a, 100b, 100c are arranged adjacent each other. The battery modules 100a, 100b, 100c are corresponding i.e. analogous battery modules all having six similar battery cells 101 arranged to be coupled in series. The battery cells of module 100a may also be referred to as "Cell 1- Cell 6" or simply "C1-C6". The battery cells of battery modules 100b and 100c may similarly be referred to as "C7-C12". It should be appreciated that the above symbols such as "C" or "Cell" used for the battery cells are herein to serve as identifiers for distinguishing several elements from each other. Battery module 100a is configured to be removably connectable to an adjacent first corresponding battery module 100b by a first electrical connection 106, wherein the first electrical connection 106 is a parallel connection. The battery module 100a comprises a positive battery module terminal 106 and a negative battery module terminal 107 and is configured to be removably coupled in parallel to the adjacent first corresponding battery module 100b, also comprising a positive battery module terminal 106 and a negative battery module terminal 107, by the first electrical connection 106 via the positive battery module terminal 106 and the negative battery module terminal 107. When the battery module 100a is removably connected in parallel to the first corresponding battery module 100b and an external load "Z₁", an electric current path 104 is formed between the positive 106 and the negative 107 terminals of the first electrical connection 106 between the two modules 100a, 100b. The negative terminal 107 of both battery modules 100a, 100b is in turn removably connected to the reference point "GND".

In some embodiments, the parallel electrical connection between the battery module 100a, 100b and the external electric load "Z₁" may at least partly be formed by the first electrical connection 104 between the battery module 100a and the first corresponding adjacent battery module 100b. When the battery module 100a and/or the battery module 100b are removably connected to the at least one external load "Z₁", an electric current path 104 is also formed between the battery modules and the external electric loads. In various aspects and embodiments such as the example of Fig. 1d, the battery module 100a is further configured to be removably connectable to the adjacent first corresponding battery module 100b and further to an adjacent second corresponding battery module 100c by at least one second electrical connection 110a-c such that each battery cell comprised in the battery module 100a is further arranged to be removably connectable to at least one battery cell comprised in the adjacent first 100b and second 100c battery modules by the at least one second electrical connection 110a-c such that the first electrical connection 106 is different from the at least one second electrical connection 110a-c. The battery module 100a is removably coupled to the adjacent first corresponding battery module 100b and further to the adjacent second corresponding battery module 100c by the at least one second electrical connection 110a-c such that each battery cell comprised in the battery module 100a is further arranged to be removably coupled to at least one battery cell comprised in the adjacent first 100b and second 100c battery modules by the at least one second electrical connection 110a-c such that at least one signal path 110a-c is formed between the battery module 100a and the adjacent first 100b and second 100c battery modules via the at least one second electrical connection 110a-c. Accordingly, the formed electric current path 104 is different from the formed at least one signal path 110a-c.

The inventors have realized that by separating the electric current path 104 formed between the battery modules 100 and the at least one external load "Z₁" from the at least one signal paths 110a-c formed amongst the battery modules 100a-c, the energy delivery aspect of the battery modules to the external loads can be separated from the control and measurements aspect amongst the battery modules. In other words, the battery modules 100 are configured to be removably coupled to the external loads *"Z_{MN}"* by the parallel connection 106 and via the positive 106 and negative 107 battery module terminals. This way, the number of battery modules removably coupled in parallel to the external loads can be increased according to the energy demands of the consumer i.e. the external loads *"Z_{MN}",* thus bringing about a modularity dimension to the battery system comprising a plurality of the battery modules 100. This advantageous objective is achieved without the need for changing the battery module design for each energy consumer having different energy level requirements and specific applications. This objective is rather achieved by introducing a universal battery module providing a predetermined voltage value (battery cells coupled in series within each module) and installation of a plurality of these universal battery modules in parallel to provide the electric current and thus the required energy level for each consumer. Further, the signal measurement amongst the modules as well as maintenance of the battery modules is made significantly easier by separating the current path 104 (which may also be referred to as power path 104) of the external loads from the at least one signal paths 110a-c. The signal paths are configured to be used for measuring the parameters of the battery modules in idle and/or runtime conditions, delivering real-time information of the battery system 300 performance without the need to disrupt the current delivery path 104 to the at least one external load *"Z_{MN}".* By separating the signal paths, if parameter measurements of a certain battery module among a plurality of battery modules connected in parallel returns a fault or malfunctioning indicator, that specific battery module can be readily identified. In several embodiments, the differential voltages between each pair of single paths may be measured to identify the faulty modules.

Even further, when a faulty battery module is identified, it can be separated from the external loads without affecting the voltage level delivered to the loads, thanks to the parallel installation of battery modules and the loads using a separate current path 104. In several embodiments, e.g. while the battery system being in full assembly, the current measurement may be used for detection of which battery module is damaged. When the identified faulty battery module is disconnected from the current/power path 104 in the battery system, the voltage can be measured to find the faulty cell within the identified faulty module. Additionally or alternatively, voltage dips of the battery system in use may be employed as a failure indicator by comparing the voltage dips at previously measured currents and checking the deviation between the measurements.

This feature alleviates the adverse effect of battery module maintenance in conventional systems, wherein the battery modules are connected in series to provide the voltage level of the energy consumer. In the conventional systems, even by neglecting the challenges of signal measurements amongst the modules, when a faulty battery module is identified, to remove and repair such a faulty battery module the whole battery system needs to be disconnected from the energy consumer, thus disrupting the process of energy delivery. However, with the advantageous solution of the present disclosure the possibility of hot-swapping battery modules during the runtime of the battery system 300 is being provided without affecting the delivered voltage and interruption of operation of the energy consumer.

Figs. 2a-2b, show a perspective view of a collocated battery module 200 and an equivalent electric circuit of the collocated module 200 according to several aspects and embodiments. In the example the collocated battery module 200 comprises a first battery module 100a and a second battery module 100b wherein each battery module comprises at least two battery cells 101 (e.g. C1-C6 in module 100a, C7-C12 in module 100b, six cells in each module of this example) arranged to be coupled in series similar to embodiments of Figs. 1a-1d. The first and the second battery modules may be configured to be removably coupled in parallel by a first electrical connection 106. The first electrical connection 106 is formed by removably connecting the positive and negative terminals 106a, 107a of the first battery module 100a to the respective positive and negative terminals 106b, 107b of the second battery module 100b. Additionally, the first and the second battery modules may be further configured to be removably coupled by at least one second electrical connection 110a-c such that each battery cell comprised in each battery module is further arranged to be removably coupled to at least one battery cell comprised in the other battery module by the at least one second electrical connection 110a-c. The first electrical connection 106 may be different from the at least one second electrical connection 110a-c.

Further, the collocated battery module 200 is configured such that wherein the first and the second modules are removably coupled, an electric current path 104 is formed between the positive 106a, 106b and the negative terminals 107a, 107b of the first electrical connection 106. Wherein each module may be further configured such that at least one signal path 110a-c may be formed between the first and the second battery modules via the at least one second electrical connection 110a-c. Thus, the formed electric current path 104 may be different from the formed at least one signal path 110a-c.

Similarly, the collocated module 200 may also be further configured to be removably coupled in parallel to at least one external electric load *"Z_{MN}"* by the first electrical connection 106 via the positive and the negative battery module terminals such that the electric current path 104 is further formed between each battery module 100a, 100b and the at least one external electric load *"Z_{MN}".*

As shown in Figs. 3a-3b, the collocated battery module 200 may be further configured to be removably coupled to one or more other collocated battery modules 200 and/or to a single battery module 100 by the at least one second electrical connection 110a-c, such that the at least one signal path 110a-c is further formed between each two adjacent collocated battery modules and/or between the adjacent collocated battery modules and the single battery modules. This is also shown by the dashed lines 110a-c extending through the whole battery system 300 amongst the adjacent collocated 200 and/or single 100 battery modules.

In several embodiments and aspects, as shown in Figs. 3a-3b the collocated battery module 200 or the single battery modules 100 may further be configured to be removably connectable to a battery management system, BMS, unit 120a, 120b by the at least one second electrical connection 110a-c. In some aspects and embodiments, the battery modules may also be connected to the BMS units 120a, 120b via one or more parallel connections 106.

The battery modules 100, 200 and the BMS units 120a, 120b may be configured to be coupled to a universal GND reference point which may be used in signal measurements among the modules.

The BMS units 120a, 120b as shown in Fig. 3a and Fig. 3b may be arranged to be removably connected to the plurality of the modules in the battery system 300 at both ends of the chains of modules. However, in some embodiments only one BMS unit may be arranged in the battery system 300. The BMS unit may be realized by any known technologies such as in integrated circuits comprised in PCB boards which can be installed and removably connected to the battery modules.

The collocated battery module 200 and/or the single battery module 100 may further be configured such that when removably coupled to the BMS units, the at least one signal path 110 (e.g. 110a-c) may further be formed between the collocated battery module and/or between the single battery module and the BMS units 120a, 120b.

As shown in Figs 3a-3b, in various aspects and embodiments, there is also provided a modular battery system 300 comprising one or more battery modules such as single battery modules 100 and/or collocated battery modules and/or a combination thereof arranged to be removably coupled and a battery management system, BMS, unit 120a, 120b arranged to be removably coupled to the one or more battery modules 100, 200.

In various aspects and embodiments such as embodiments of Figs. 1a-1b, 2a-2b, 3a-3b, the first electrical connection and/or the at least one second electrical connection between the battery modules and the adjacent first and second battery modules and/or BMS units may be formed via a conductive elastic and/or springing connection terminal 130. The number of connection terminals 130 used to removably couple various components may depend on the intended requirements and applications and can be arranged at any suitable numbers or locations within the battery system to provide the electrical and mechanical coupling amongst the components. The connections terminals 130 may be in turn removably coupled to the electrically conductive adhesive elements 111 which provides the aforementioned advantages.

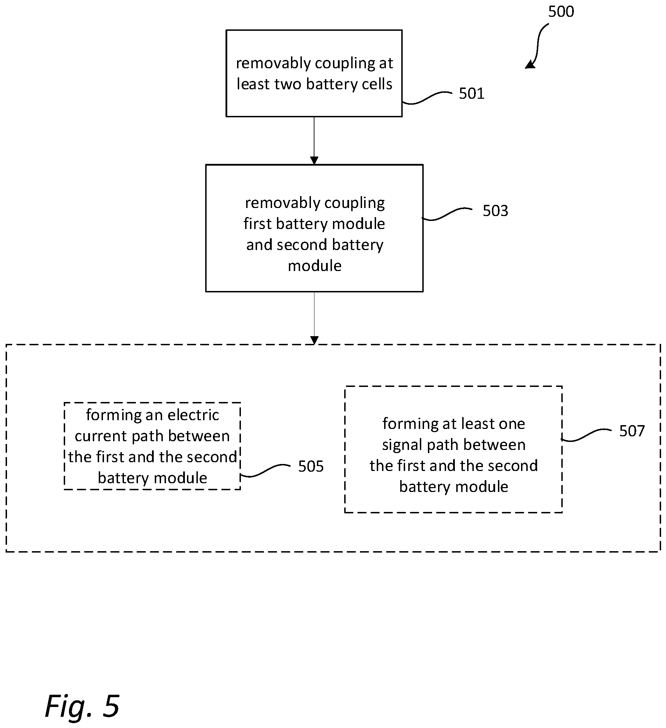

Fig. 5 illustrates a flowchart of a method 500 of connecting a first 100 (e.g. 100a or 100b or 100c) and a second battery module (e.g. 100a, 100b or 100c) each module comprising at least two battery cells 101. The method comprises removably coupling 501 the at least two battery cells, comprised in each of the first and the second battery modules, in series such that each battery cell comprised in each battery module is arranged to be removably coupled to an adjacent battery cell in the same battery module via an individual serial connection 102. The serial connection 102 may in various embodiments be realized by the serial connection plates 103. The method further comprises, removably coupling 503 the first battery module and the second battery module such that the first and the second battery modules are removably coupled by a first electrical connection 106 and/or at least one second electrical connection 110 (e.g. 110a, 110b, 110c), wherein the first electrical connection 106 is different from the at least one second electrical connection 110.

In several aspects and embodiments, the method may further comprise forming 505 an electric current path 104 between the first and the second battery modules via the first electrical connection, wherein the first electrical connection is a parallel electrical connection; and forming 507 at least one signal path 110 (e.g. 110a, 110b, 110c) between the first and the second battery module via the at least one second electrical connection. The formed electric current path 104 may thus be different from the formed at least one signal path 110.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the disclosure may be at least in part implemented by means of both hardware and software, and that several "means" or "units" may be represented by the same item of hardware.

Although the figures may show a specific order of features, elements, or method steps, the order of the steps may differ from what is depicted. In addition, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. The above-mentioned and described embodiments are only given as examples and should not be limiting to the present disclosure. Other solutions, uses, objectives, and functions within the scope of the disclosure as claimed in the below described patent embodiments should be apparent for the person skilled in the art.

## Claims

1. A battery module comprising:
at least two battery cells arranged to be coupled in series;
wherein each battery cell comprised in each battery module is arranged to be removably coupled to an adjacent battery cell in the same battery module via an individual serial connection plate, wherein each battery cell comprised in each battery module is arranged to be removably coupled to the individual serial connection plate via an electrically conductive adhesive element.

2. The battery module according to claim 1, wherein the battery module is configured to be removably connectable to an adjacent first corresponding battery module by a first electrical connection; and
wherein the battery module is further configured to be removably connectable to the adjacent first corresponding battery module and further to an adjacent second corresponding battery module by at least one second electrical connection such that each battery cell comprised in the battery module is further arranged to be removably connectable to at least one battery cell comprised in the adjacent first and second battery modules by the at least one second electrical connection;
wherein the first electrical connection is a parallel electrical connection and is different from the at least one second electrical connection

3. The battery module according to claim 1 or 2, wherein the battery module is further configured to be removably connectable in parallel to at least one external electric load by a parallel electrical connection.

4. The battery module according to claim 2 or 3, wherein the battery module is further configured to be removably connectable to a battery management system, BMS, unit by the at least one second electrical connection.

5. The battery module according to any one of the preceding claims, wherein the battery module further comprises a positive battery module terminal and a negative battery module terminal and is configured to be removably coupled in parallel to the adjacent first corresponding battery module by the first electrical connection via the positive battery module terminal and the negative battery module terminal such that an electric current path is formed between the positive and the negative terminals of the first electrical connection; and wherein the battery module is further configured to be removably coupled to the adjacent first corresponding battery module and further to the adjacent second corresponding battery module by the at least one second electrical connection such that each battery cell comprised in the battery module is further arranged to be removably coupled to at least one battery cell comprised in the adjacent first and second battery modules by the at least one second electrical connection such that at least one signal path is formed between the battery module and the adjacent first and second battery modules via the at least one second electrical connection; wherein the formed electric current path is different from the formed at least one signal path.

6. The battery module according to any of the preceding claims 2-5, wherein the first electrical connection and/or the at least one second electrical connection between the battery module and the adjacent first and second battery modules is formed via a conductive elastic and/or springing connection terminal.

7. A modular battery system comprising:
one or more battery modules according to any one of claims 1 - 5 arranged to be removably coupled; and
a battery management system, BMS, unit arranged to be removably coupled to the one or more battery modules.

8. A method of connecting a first and a second battery cell of a battery module comprising at least two battery cells; the method comprising:
- removably coupling (501) the at least two battery cells, comprised in the battery module, in series such that each battery cell comprised in the battery module is arranged to be removably coupled to an adjacent battery cell in the same battery module via an individual serial connection plate, wherein each battery cell in the battery module is arranged to be removably coupled to the individual serial connection plate via an electrically conductive adhesive element.

9. The method according to claim 8, wherein the method comprises:
- removably coupling (503) a first battery module and a second battery module, the first and second battery modules each comprising at least two battery cells, such that the first and the second battery modules are removably coupled by a first electrical connection and at least one second electrical connection, wherein the first electrical connection is different from the at least one second electrical connection.

10. The method according to claim 9, wherein the method further comprises:
- forming (505) an electric current path between the first and the second battery modules via the first electrical connection, wherein the first electrical connection is a parallel electrical connection; and
- forming (507) at least one signal path between the first and the second battery module via the at least one second electrical connection;
wherein the formed electric current path is different from the formed at least one signal path.
